# EUROPÄISCHE PATENTSCHRIFT

(11) **EP 2 397 212 B1**
(45) Veröffentlichungstag und Bekanntmachung des Hinweises auf die Patenterteilung: **21.05.2014**
(21) Anmeldenummer: 10006168.8
(22) Anmeldetag: 15.06.2010
(51) Int. Cl.: B01D 53/14, B01J 20/34, B63G 8/36

(54) **Verfahren zur Regeneration eines Adsorbers oder Absorbers**
Method for regenerating an adsorber or absorber
Procédé de régénération d'un adsorbeur ou absorbeur

(43) Veröffentlichungstag der Anmeldung: 21.12.2011
(73) Patentinhaber: Astrium GmbH, 82024 Taufkirchen (DE)
(72) Erfinder: Raatschen, Willigert, Dr., 88090 Immenstaadt (DE); Schauer, Lutz, 88048 Friedrichshafen (DE); Westermann, Helmut, 88677 Markdorf (DE); Matthias, Carsten, Dr., 88046 Friedrichshafen (DE)
(74) Vertreter: Daub, Thomas

(56) Entgegenhaltungen:
- DE-B3-102006 048 716
- DE-C1- 19 830 470
- DE-T2- 69 002 112
- FR-A1- 2 552 160

## Beschreibung

Die Erfindung betrifft ein Verfahren zur Regeneration eines Adsorbers oder Absorbers an Bord eines Unterseeboots nach dem Oberbegriff des Patentanspruchs 1.

Unterseeboote sind generell mit festen oder flüssigen Adsorbern oder Absorbern ausgestattet, um Schadgase aus der Kabinenluft zu binden. Schadgase können dabei von Personen an die Kabinenluft abgegebene metabolische Produkte, Ausgasungsprodukte aus Materialien und Prozessen sowie Leckagen aus Aggregaten sein.

Bei den metabolischen Produkten steht die Bindung des ausgeatmeten CO₂ größenmäßig im Vordergrund. Daneben werden zahlreiche flüchtige organische Substanzen, VOC (volatile organic compounds) sowohl von Personen als auch von Materialien und Prozessen emittiert.

Während für Unterseeboote mit kurzen Tauchzeiten häufig nicht-reversible Bindekonzepte zum Einsatz kommen, wie z. B. Lithiumhydroxid oder Atemkalk für die CO₂-Bindung und Aktivkohle für die VOC-Bindung, werden bei länger tauchenden Unterseebooten wie nuklear angetriebenen Unterseebooten oder AIP (Air Independent Propulsion) -Unterseebooten regenerative Bindeverfahren eingesetzt. Weil hierdurch Bindemittel eingespart wird, reduziert sich der Raumbedarf für die Lagerung der Bindemittel. Dieser Vorteil wird dadurch erkauft, dass auf der anderen Seite ein erhöhter Energieaufwand für die Regenerierung erforderlich ist. Bei nuklear angetriebenen Unterseebooten stellt das normalerweise kein Problem dar. Bei AIP Unterseebooten allerdings ist elektrische Energie für eine Regenerierung von Schadgasbindesystemen nur sehr beschränkt verfügbar.

Regenerative Bindeverfahren benötigen elektrische Energie, z.B. für einen Lüfter, einen Gaskompressor zur Außenbordsverbringung der Schadgase oder für Steuerungselemente. Häufig wird auch Energie zum Erwärmen der Ad-/Absorbentien oder zur Erzeugung von Wasserdampf für die Regeneration benötigt. Dies kann elektrische Energie oder aber auch thermische Energie sein.

Vorteilhaft sind hier für die Wärme- bzw. Wasserdampferzeugung Unterseeboote mit AIP-Antriebskonzepten, bei denen Abwärme auf dem geforderten Niveau abfällt und genutzt werden kann, wie z. B. bei Unterseebooten mit Stirlingmotor, geschlossenem Dieselmotor oder Reformer für Brennstoffzellen.

Bei Unterseebooten mit Brennstoffzellen und H₂/O₂ als Treibstoff wird üblicherweise kein Reformer benötigt und die Abwärme der Brennstoffzelle liegt auf zu niedrigem Niveau, als dass sie sinnvoll verwendet werden kann. Für derartige Unterseeboote werden somit neue Konzepte benötigt, damit der Bedarf an thermischer Energie gedeckt werden kann.

Aus DE 10 2006 048 716 B3 ist ein Verfahren bekannt, bei welchem H₂ und O₂, welche für den Betrieb der Brennstoffzellen ohnehin an Bord vorhanden sind, verbrannt werden, um unter Ausnutzung der Reaktionswärme Wasserdampf aus flüssigem Wasser für den Regenerierungsprozess von CO₂ -Bindesystemen zu erzeugen. Eine weitere Variante sieht auch die Ausnutzung des bei der Reaktion von H₂ und O₂ entstehenden Wasserdampfes für die Regeneration vor. Bei dieser Reaktion werden keine weiteren Abgaskomponenten wie z. B. CO₂ oder CO gebildet.

Dieser bekannte Prozess hat jedoch den Nachteil, dass große Tanks benötigt werden, um den Wasserstoff zu speichern. Meist werden hierzu Metallhydridspeicher verwendet, bei welchen die Beladungsdichte unter 3 Gew-% liegt.

Aus der DE 690 02 112 T2 sowie der FR 2 552 160 A1 sind jeweils thermische Dampfmaschinen zur Verwendung in einem U-Boot bekannt, bei denen aus der Verbrennung eines kohlenwasserstoffhaltigen Energieträgers mit Sauerstoff in einem Stirling-Hirn Kreisprozess das als Arbeitsmittel verwendete Wasser in überhitzten Wasserdampf umgewandelt wird. In der DE 690 02 112 T2 wird das bei der Verbrennung entstehende CO₂ in Flaschen gespeichert, die an der Außenseite des Rumpfs des Unterseeboots angeordnet sind, und welche ursprünglich den für die Verbrennung benötigten Sauerstoff enthielten. In der FR 2 552 160 A1 wird das entstehende CO₂ mittels eines Kompressors außenbords verbracht.

Aufgabe der Erfindung ist es somit, ein Verfahren zur Regeneration von mit metabolischem CO₂ beladenen Ad-/Absorbentien an Bord von Unterseebooten anzugeben, bei der das Speichervolumen des für die Regeneration benötigten Energieträgers wesentlich vermindert werden kann.

Diese Aufgabe wird mit dem Verfahren nach Anspruch 1 gelöst. Vorteilhafte Ausführungen sind Gegenstand von Unteransprüchen.

Erfindungsgemäß wird zur Erzeugung von thermischer Energie ein kohlenwasserstoffhaltiger, in der Regel flüssiger, Energieträger wie z.B. Ethanol, Methanol, Propan, Butan etc. zur Verbrennung mit O₂ verwendet.

Die bei der Verbrennung dieser Energieträger neben Wasserdampf entstehenden Gase werden erfindungsgemäß mit einem Kompressor außenbords verbracht. Da für das regenerative CO₂.Bindesystem zur Entfernung des desorbierten metabolischen CO₂ in der Regel bereits ein CO₂-Kompressor an Bord vorhanden ist, kann dieser Kompressor vorteilhaft auch dazu genutzt werden, Abgase außenbords zu verbringen.

Um dabei die Abgasmenge für den Kompressor so gering wie möglich zu halten, kann eine Abgaskühlung mit Kondensatabscheidung vorgeschaltet werden.

Grundsätzlich kann die durch die Verbrennung erzeugte thermische Energie auf zwei unterschiedliche Weisen für die Regeneration eingesetzt werden:
1. Die Verbrennungswärme kann zur Verdampfung von Wasser genutzt werden. Der so produzierte Wasserdampf wird zur Regenerierung der Adsorber oder Absorber genutzt.

Eine spezielle Anwendung hierfür sind Regenerationsprozesse, bei welchen gesättigter oder überhitzter Wasserdampf zwischen 80-150°C zum Austreiben der Schadgase aus dem Absorber benötigt wird, wie z. B. bei der Regenerierung von CO₂-Adsorbern auf der Basis von Festamin oder der Regenerierung von Zeolithbetten nach der Bindung von metabolischem CO₂. Weitere geeignete Adsorber sind Ionenaustauscherharze oder Festamine zur CO₂-Bindung, insbesondere die in der DE 198 30 470 C1 beschriebenen. Darüber hinaus kann der Adsorber ein Zeolith zur Bindung von VOC oder ein Freon, im besonderen R134a, enthalten. Sämtliche hier genannten Adsorber eignen sich auch für die Regeneration durch Wärmeeintrag (siehe unten 2.)

Nur das durch die Verbrennungswärme verdampfte flüssige Wasser wird zur Regenerierung genutzt, während die Verbrennungsprodukte (CO₂. H₂O und eventuellen weiteren Nebenprodukten) separat davon und unter Umgehung von Adsorber und Absorber zum Kompressor geführt werden, wo sie außenbords abgeführt werden.
2. Die Verbrennungswärme kann auch direkt, d.h. ohne Zwischenschaltung einer Wasserverdampfung, zur Regenerierung der Adsorber oder Absorber eingesetzt werden. Hier können insbesondere Absorber in Form eines flüssigen Amins, z.B. Monoethanolamin MEA, eingesetzt werden.

Die Erfindung hat den Vorteil, dass die kohlenwasserstoffhaltigen Energieträger mit höherer Beladungs- und Energiedichte gespeichert werden, so dass sich ein deutlich geringeres Speichervolumen ergibt als bei dem bekannten H₂/O₂-Verbrennungsverfahren.

Die Erfindung eignet sich insbesondere zur Anwendung in Unterseebooten mit AIP-Antriebskonzepten, z.B. solchen auf der Basis von Brennstoffzellen.

Die Erfindung wird anhand konkreter Ausführungsbeispiele erläutert. Es zeigen:
Fig. 1 zeigt eine erste Ausführung des erfindungsgemäßen Verfahrens, wobei die Regenerierung mittels Wasserdampf erfolgt;
Fig. 2 zeigt eine weitere Ausführung des erfindungsgemäßen Verfahrens, wobei die Regenerierung mittels direkter Wärmeeinkopplung in einen festen Adsorber erfolgt;
Fig. 3 zeigt eine weitere Ausführung des erfindungsgemäßen Verfahrens, wobei die Regenerierung mittels direkter Wärmeeinkopplung in einen flüssigen Absorber erfolgt.

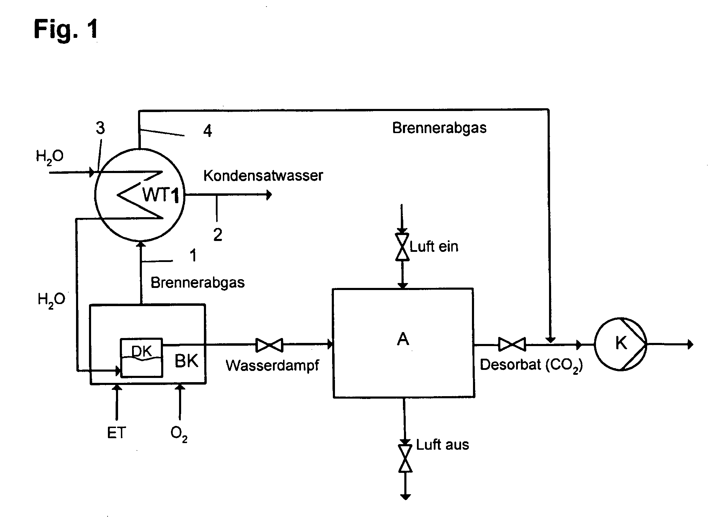

Fig. 1 zeigt eine erste Ausführung des erfindungsgemäßen Prozesses, wobei die Regenerierung des Absorbers oder Adsorbers mittels Wasserdampf erfolgt.

Die Erzeugung des Wasserdampfs erfolgt in einer Brennkammer BK, innerhalb welcher sich ein Dampfkessel DK mit flüssigem Wasser befindet. Das Wasser wird von außen über die Leitung 3 zugeführt. Der bei Speicherung häufig in flüssiger Form vorliegende Energieträger ET wird entspannt bzw. vergast, bevor er in die Brennkammer BK strömt. Ebenfalls in die Brennkammer BK eingeführt wird Sauerstoff O₂. Der Dampfkessel DK kann sich auch außerhalb der Brennkammer BK befinden.

Die bei der Verbrennungsreaktion entstehende Wärme wird dem Dampfkessel DK zugeführt, in welchem das flüssige Wasser verdampft wird. Der entstehende Wasserdampf wird dem Ad-/Absorberbed A zu dessen Regenerierung zugeleitet. Das Desorbat, im Wesentlichen metabolisches CO₂, wird einem Kompressor K zugeführt, über den es außenbords abgeführt wird.

Die Verbrennungsprodukte, bestehend aus CO₂, H₂O und eventuellen weiteren Nebenprodukten, verlassen die Brennkammer BK über Leitung 1 und strömen in einen Gas/Wasserwärmetauscher WT1, welcher die Abgase abkühlt und dabei das zu verdampfende Wasser in Leitung 3 vorwärmt. Die Wasserverdampfung kann somit in Brennwerttechnik realisiert werden. Anfallendes Kondensat aus den Brennerabgasen wird über Leitung 2 abgeführt. Über Leitung 4 verlassen die Brennerabgase vermindert um das ausgefallene Kondensat den Gas/Wasserwärmetauscher WT und werden von demselben Kompressor K, mit dem die Außenbordverbringung des Desorbats (metabolischen CO₂) bewerkstelligt wird, außenbords abgeführt.

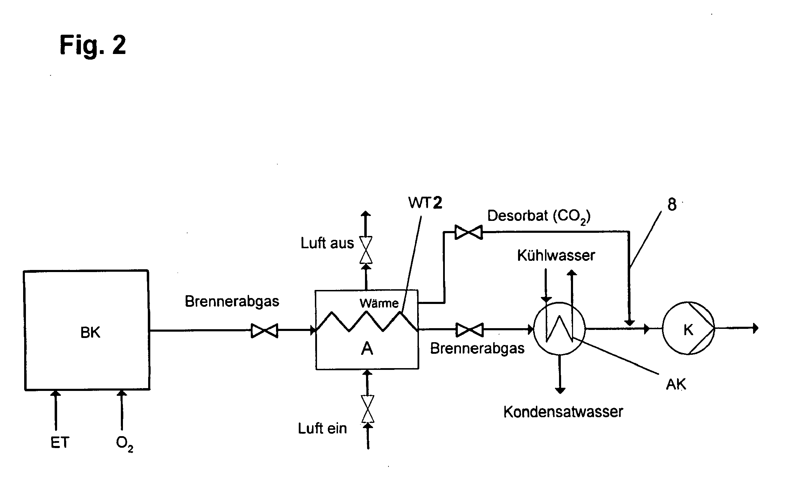

Fig. 2 zeigt eine weitere Ausführung des erfindungsgemäßen Prozesses. Bei dieser Ausführung wird die bei der Verbrennung in der Brennkammer BK freiwerdende Energie direkt zur Regenerierung des Ad-/Absorbers A genutzt. Eine H₂0-Dampferzeugung zur Regeneration wird also in dieser Ausführung nicht benötigt. Bei diesem Ad-/Absorber handelt es sich zum Beispiel um einen Feststoff. Die Verbrennungsgase werden einem Wärmetauscher WT2 zugeführt, über den die Einkoppelung der Wärme in den Ad-/Absorber A erfolgt. Die den Wärmetauscher WT2 verlassenden Verbrennungsabgase werden, wie bei der vorhergehenden Fig. 1, nach Durchlaufen einer Abgaskühlung AK mit Kondensatabscheidung zusammen mit dem metabolischen CO₂ Desorbat (aus Leitung 8) über den Kompressor K außenbords abgeführt.

Brennkammer BK und die Ab-/Adsorbereinheit A mit integriertem Wärmetauscher WT können entweder getrennt voneinander oder in einem Bauteil ausgeführt sein.

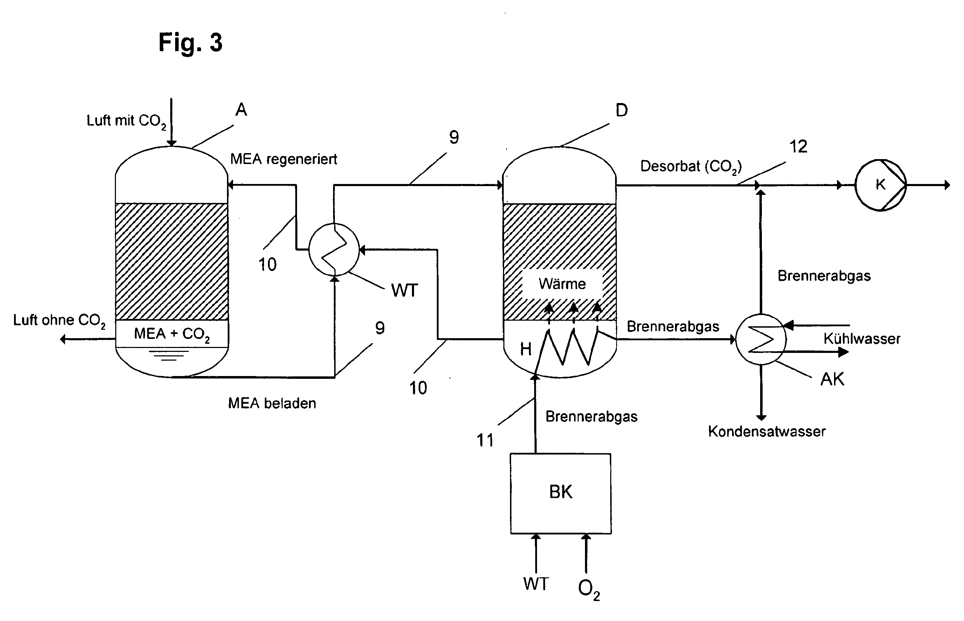

Fig. 3 zeigt eine weitere Ausführung des erfindungsgemäßen Prozesses, welcher für Systeme mit Flüssigaminen (Monoethanolamin, MEA) als Absorber für metabolisches CO₂ eingesetzt wird. Der flüssige, mit CO₂ beladene Absorber MEA wird zur Regenerierung aus der Absorbereinheit A über die Leitung 9 in die Desorbereinheit D und nach erfolgter Regenerierung über die Leitung 10 wieder zurück in die Absorbereinheit A geleitet. Das die Desorbereinheit D wieder verlassende, warme Absorberfluid kann über einen Wärmetauscher WT zur Vorwärmung des der Desoberbeinheit D zuzuleitenden Absorberfluids eingesetzt werden.

Wie bei der Ausführung nach Fig. 2 wird in der Ausführung nach der Fig. 3 die bei der Verbrennung in der Brennkammer BK freiwerdende Energie direkt, d.h. ohne Zwischenschaltung einer Verdampfung von Wasser, zur Regenerierung des sich in der Desorbereinheit D befindlichen Absorbers genutzt. Zu diesem Zweck ist in die Desorbereinheit D ein Heizer H integriert, über den die Wärme aus der Verbrennung dem zu regenerierenden Absorbermedium zugeführt wird. Zu diesem Zweck werden die Verbrennungsabgase aus der Brennkammer BK über Leitung 11 dem Heizer H zugeleitet.

Die den Heizer H verlassenden Verbrennungsgase werden nach Durchlaufen einer Abgaskühlung AK mit Kondensatabscheidung dem Kompressor K zugeführt und zusammen mit dem Desorbat (aus Leitung 12) außenbords abgeführt.

## Patentansprüche

1. Verfahren zur Regeneration eines Adsorbers oder Absorbers (A) an Bord eines Unterseeboots, wobei der Adsorber oder Absorber (A) zum Binden von metabolisch erzeugten CO₂-haltigen Schadgasen im Innern des Unterseeboots vorhanden ist, wobei die thermische Energie zur Regeneration des Adsorbers oder Absorbers (A) durch Verbrennung eines kohlenwasserstoffhaltigen Energieträgers mit Sauerstoff erzeugt wird, wobei desorbierte metabolisch erzeugte CO₂-haltigen Schadgase über einen Kompressor (K) außenbords verbracht werden, wobei mindestens ein Verbrennungsprodukt zusammen mit den desorbierten metabolisch erzeugten CO₂-haltigen Schadgasen über den Kompressor (K) außenbords verbracht wird.

2. Verfahren nach Anspruch 1, **dadurch gekennzeichnet, dass** die bei der Verbrennung des kohlenwasserstoffhaltigen Energieträgers mit Sauerstoff entstehende Wärme zur Verdampfung von Wasser genutzt wird, wobei der entstehende Wasserdampf zur Regenerierung des Adsorbers oder Absorbers (A) genutzt wird.

3. Verfahren nach Anspruch 2, **dadurch gekennzeichnet, dass** das zu verdampfende flüssige Wasser mittels eines Wärmetauschers (WT1) unter Einsatz der Verbrennungsprodukte vorgewärmt wird.

4. Verfahren nach Anspruch 1, **dadurch gekennzeichnet, dass** die bei der Verbrennung des kohlenwasserstoffhaltigen Energieträgers mit Sauerstoff erzeugte Wärme ohne Zwischenschaltung einer Verdampfung von Wasser, zur Regenerierung des Adsorbers oder Absorbers (A) genutzt wird.

5. Verfahren nach Anspruch 4, **dadurch gekennzeichnet, dass** der Absorber ein flüssiges Amin, z.B. Monoethanolamin MEA, oder ein Feststoff ist, wobei bei letzterem die Einkopplung der Wärme über einen Wärmetauscher (WT2) erfolgt.

6. Verfahren nach einem der vorangehenden Ansprüche, **dadurch gekennzeichnet, dass** dem Kompressor (K) eine Abgaskühlung (AK) mit Kondensatabscheidung vorgeschaltet ist.

7. Verfahren nach einem der vorangehenden Ansprüche, **dadurch gekennzeichnet, dass** der Adsorber (A) ein Ionenaustauscherharz oder ein Festamin zur CO2-Bindung ist.

8. Verfahren nach einem der vorangehenden Ansprüche, **dadurch gekennzeichnet, dass** der Adsorber (A) ein Zeolith zur Bindung von VOC oder ein Freon, im besonderen R134a, ist.

## Claims

1. Method for regenerating an adsorber or absorber (A) on board a submarine, wherein the adsorber or absorber (A) is present in the interior of the submarine for binding metabolically generated CO₂-containing harmful gases, wherein the thermal energy for regenerating the adsorber or absorber (A) is generated by burning a hydrocarbonaceous energy carrier with oxygen, wherein desorbed, metabolically generated, CO₂-containing harmful gases are transferred outboard via a compressor (K), wherein at least one combustion product, together with the desorbed, metabolically generated, CO₂-containing harmful gases, is transferred outboard via the compressor (K).

2. Method according to Claim 1, **characterized in that** the heat generated in the combustion of the hydrocarbonaceous energy carrier with oxygen is utilized for vaporizing water, wherein the resultant water vapour is utilized for regenerating the adsorber or absorber (A).

3. Method according to Claim 2, **characterized in that** the liquid water that is to be vaporized is preheated by means of a heat exchanger (WT1) using the combustion products.

4. Method according to Claim 1, **characterized in that** the heat generated in the combustion of the hydrocarbonaceous energy carrier with oxygen is utilized for regenerating the adsorber or absorber (A) without interconnection of a vaporization of water.

5. Method according to Claim 4, **characterized in that** the absorber is a liquid amine, e.g. monoethanolamine MEA, or a solid, wherein in the case of the latter the heat is coupled in via a heat exchanger (WT2).

6. Method according to any one of the preceding claims, **characterized in that** an exhaust gas cooler (AK) with condensate separation is connected upstream of the compressor (K).

7. Method according to any one of the preceding claims, **characterized in that** the adsorber (A) is an ion-exchange resin or a solid amine for CO₂ binding.

8. Method according to any one of the preceding claims, **characterized in that** the adsorber (A) is a zeolite for binding VOCs or a Freon, in particular R134a.

## Revendications

1. Procédé pour la régénération d'un adsorbant ou absorbant (A) à bord d'un sous-marin, l'adsorbant ou l'absorbant (A) étant présent à l'intérieur du sous-marin pour la fixation des gaz nocifs d'origine métabolique qui contiennent du CO₂, dans lequel l'énergie thermique pour la régénération de l'adsorbant ou absorbant (A) est produite par combustion d'une source d'énergie contenant un hydrocarbure avec de l'oxygène, dans lequel les gaz nocifs d'origine métabolique, qui sont désorbés et contiennent du CO₂, sont transportés à l'extérieur au moyen d'un compresseur (K), au moins un produit de combustion étant transporté à l'extérieur du sous-marin conjointement avec les gaz nocifs d'origine métabolique, qui sont désorbés et contiennent du CO₂, au moyen du compresseur (K).

2. Procédé selon la revendication 1, **caractérisé en ce que** la chaleur dégagée lors de la combustion avec de l'oxygène de la source d'énergie contenant un hydrocarbure est utilisée pour vaporiser de l'eau, la vapeur d'eau résultante étant utilisée pour la régénération de l'adsorbant ou absorbant (A).

3. Procédé selon la revendication 2, **caractérisé en ce que** l'eau liquide à vaporiser est préchauffée au moyen d'un échangeur thermique (WT1) avec utilisation des produits de combustion.

4. Procédé selon la revendication 1, **caractérisé en ce que** la chaleur produite lors de la combustion avec de l'oxygène de la source d'énergie contenant un hydrocarbure est utilisée, sans intercalation d'une vaporisation d'eau, pour la régénération de l' adsorbant ou absorbant (A).

5. Procédé selon la revendication 4, **caractérisé en ce que** l'absorbant est une amine liquide, par exemple la monoéthanolamine MEA, ou un solide, dans le dernier cas l'introduction de la chaleur s'effectuant au moyen d'un échangeur thermique (WT2).

6. Procédé selon l'une quelconque des revendications précédentes, **caractérisé en ce qu'**au compresseur (K) est raccordé en amont un refroidissement de gaz résiduel (AK) avec à séparation de condensat.

7. Procédé selon l'une quelconque des revendications précédentes, **caractérisé en ce que** l'adsorbant (A) est une résine échangeuse d'ions ou une amine solide pour la fixation de CO₂.

8. Procédé selon l'une quelconque des revendications précédentes, **caractérisé en ce que** l'adsorbant (A) est une zéolithe pour la fixation de COV ou un fréon, en particulier R134a.
